# EUROPÄISCHE PATENTSCHRIFT

(11) **EP 2 644 358 B1**
(45) Veröffentlichungstag und Bekanntmachung des Hinweises auf die Patenterteilung: **22.10.2014**
(21) Anmeldenummer: 12002337.9
(22) Anmeldetag: 30.03.2012
(51) Int. Cl.: B29C 51/44, B25J 15/06, B65G 47/91, B29C 37/00, B65G 67/16

(54) **Verfahren und Vorrichtung zur Entnahme von aus einem Mehrfachkavitätswerkzeug einer Thermoformmaschine ausgeschobenen Fertigartikeln**
Method and device for removing finished items emitted from a multiple cavity tool of a thermoforming machine
Procédé et dispositif pour l'extraction d'articles préfabriqués poussés vers l'extérieur à partir d'un outil à plusieurs empreintes multiple d'une machine de thermoformage

(43) Veröffentlichungstag der Anmeldung: 02.10.2013
(73) Patentinhaber: Gabler Thermoform GmbH & Co. KG, 23568 Lübeck (DE)
(72) Erfinder: Rowedder, Axel, 23623 Ahrensbök (DE)
(74) Vertreter: Grosse, Wolf-Dietrich Rüdiger

(56) Entgegenhaltungen:
- EP-A1- 1 800 836
- EP-A1- 2 251 181
- US-A- 6 022 208

## Beschreibung

Die Erfindung betrifft ein Verfahren und eine Vorrichtung zur Entnahme von aus einem Mehrfachwerkzeug einer Thermoformmaschine ausgeschobenen Fertigartikeln aus thermoplastischem Kunststoff und Übergabe der Fertigartikel in eine Nachfolgestation, wie eine Stapeleinrichtung, umfassend eine Schwenk-Fangvorrichtung, die mit einer zur Versorgung mit einem Volumenstrom an einen Unterdruckerzeuger angeschlossenen Saugkonenplatte ausgebildet ist, wobei die zur Aufnahme der Fertigartikel vorgesehenen Saugkonen jeweils mindestens eine sich vom Saugkonenkopf bis in die Saugkonenplatte erstreckende, vorzugsweise koaxial zur Artikelöffnung angeordnete Versorgungsbohrung zum Anlegen eines Unterdrucks aufweisen.

Eine solchermaßen ausgebildete Schwenk-Fangvorrichtung mit einer Saugkonenplatte, die üblich aus einem Saugkasten und einer Formatplatte mit den darauf vorgesehenen Saugkonen besteht, zur Produkthandhabung ist beispielsweise durch die EP 2 251 181 A1, das ein Verfahen gemäß dem Oberbegriff des Anspruchs 1 und eine Vorrichtung gemäß dem Oberbegriff des Anspruchs 3 offenbart, bekannt geworden.

Die Schwenk-Fangvorrichtung ist zwischen einem kombinierten Mehrfachform- und Stanzwerkzeug einer Thermoformmaschine einerseits und einer dieser nachgeschalteten Stapelstation zur Aufnahme der Fertigartikel andererseits vorgesehen. Die Schwenk-Fangvorrichtung erfordert dabei grundsätzlich neben einer line-aren Verfahrachse zum Schwenken eine in der Verfahreinheit der Stapelvorrichtung angeordnete Drehachse.

Auf einer Formatplatte der Schwenk-Fangvorrichtung ist eine Vielzahl von mit Konusstangen ausgebildeten Saugkonen vorgesehen, die die aus dem Formwerkzeug ausgeschobenen Fertigartikel zum Weitertransport zur Abstapelung aufnehmen.

Die Saugkonen und Konusstangen sind mit einer zentralen Versorgungsbohrung versehen, die sich von ihrem einen offenen Ende an der Unterseite der Formatplatte durch die Konusstange bis zu ihrem anderen offenen Ende am Saugkonenkopf hin erstreckt.

An der den Saugkonen entgegengesetzten bzw. abgewandten Seite ist die Formatplatte in der Praxis auf einem Saugkasten befestigt, über den die zentralen Versorgungsbohrungen mit einem Unterdruck versorgt werden, so dass die Fertigartikel am Saugkonenkopf angesaugt werden und dichtend auf diesem aufliegen.

Die Formatplatte mit den Saugkonen und dem Saugkasten ist Bestandteil der Verfahrachsen zum Schwenken/Drehen und unterliegt somit Massekräften, hervorgerufen durch die entsprechenden Beschleunigungen und das Gewicht der verfahrbaren Anlagenkomponenten.

Da die moderne Verfahrens- und Maschinentechnik immer kürzere Zykluszeiten und somit größere Ausstoßleistungen anstrebt und ermöglicht, muss auch die zulässige Bewegungszeit der Schwenk-Fangvorrichtung je Produktionstakt entsprechend reduziert werden, wodurch die Beschleunigungswerte und die Massenkräfte der Schwenk-Fangvorrichtung zusätzlich anwachsen.

Des weiteren muss zur Bemessung der Entnahme-/Stapelzykluszeit neben der reinen Verfahrzeit zum Schwenken und Drehen die Evakuierungszeit des Unterdruckvolumens mit berücksichtigt werden. Dieses definiert sich einerseits durch die Schnittstelle Saugkonen/Fertigartikel und andererseits durch das Volumen der zentralen Versorgungsbohrungen, des Saugkastens sowie der Versorgungsleitungen zum Aufbau des Haltedrucks für die Fertigartikel.

Da die Schwenk-Fangvorrichtung während eines jeden Zyklus zweimal linear verfahren und die Formatplatte mit Saugkonen und Saugkasten zweimal um 180° geschwenkt wird, wird zur Vakuumeinleitung in den Saugkasten nur ein sehr flexibler Versorgungsschlauch mit begrenztem Durchmesser eingesetzt.

Der strömungstechnisch ungünstig kleine Durchmesser des Versorgungsschlauchs bedingt einen verhältnismäßig hohen Versorgungs- bzw. Systemdruck, weil die Druckverluste groß sind.

Einhergehend damit ist auch ein entsprechend hoher Arbeitsdruck zur Erzeugung des Unterdrucks bzw. eines Vakuums erforderlich, wozu häufig Ejektordüsen oder Vakuumpumpen eingesetzt werden, die allerdings nur relativ geringe Volumenströme bei gleichzeitig hohen Unterdrücken zulassen.

Bei dem recht großen zu evakuierenden Luftvolumen aus den Saugkonen und dem Saugkasten verstreicht eine gewisse Zeit für den Druckaufbau, da hierzu während der Aufnahme eines Fertigartikels dieser der Druckflächen bildenden Kontur der Saugkonen zugestellt und entsprechend der zum Druckaufbau benötigten Zeit in dieser Aufnahmeposition gehalten werden muss. Durch diese Wartestellung verstreicht wertvolle Zykluszeit.

Der Druckaufbau wird mitunter beschleunigt, indem mit großen Druckdifferenzen agiert wird. Der Fertigartikel wird in der Folge mit einem großen, überdimensionierten Druck gehalten, was insbesondere bei dünnwandigen und leichten Fertigteilen zu Problemen führt.

Besteht eine Undichtigkeit im Drucksystem, beispielsweise hervorgerufen durch einen defekten oder fehlenden Fertigartikel, so ist die Auswirkung zumeist ein zusammenbrechendes Druckpotential mit der Folge, dass auch die übrigen Fertigartikel nicht mehr angesaugt werden.

Die Fertigartikel fallen bzw. schleudern dann von den Saugkonen, wodurch Beschädigungen an den Werkzeugen der Thermoformmaschine einerseits und der beispielsweise Stapelkörbe der Stapelstation andererseits auftreten können. Zumindest wird aber aufgrund von umherfliegenden Fertigartikeln eine Abschaltung der Thermoformmaschine erforderlich.

Nach der Aufnahme der aus dem Werkzeug der Thermoformmaschine ausgeschobenen Fertigartikel mittels der mit Unterdruck versorgten Saugkonen der Schwenk-Fangvorrichtung, erfolgt nach dem Schwenkvorgang eine Abgabe der Fertigprodukte in die Nachfolgestation, z. B. ein Stapelkorb oder dergleichen Vorrichtung einer Stapelstation, wo sie ineinander gestapelt werden.

Solche Stapelaufnahmen bestehen aus Führungen zur Auf- bzw. Anlage der Fertigartikel und weisen Halteelemente auf.

Die Halteelemente können dabei als elastische Verjüngungen des Stapelrandes in Form von Bürsten oder Gummistreifen ausgeführt sein. Ferner können auch mechanische Halteelemente in Form von in Stapelrichtung wirkenden Hinterschneidungen zum Einsatz kommen.

Die Haltelemente fixieren formschlüssig den abgegebenen Fertigartikel, so dass dieser bei einer Rückstellbewegung der Saugkone innerhalb der Stapelaufnahme verbleibt.

Auch bei der vorstehend erläuterten Abgabe der Fertigartikel, insbesondere bei hohen Produktionstaktzahlen, ist die Belüftungszeit, d.h. die Zeitspanne in der der Unterdruck bzw. das Vakuum abgebaut wird und somit an den Saugkonen wieder ein Normaldruck vorherrscht, von großer Bedeutung.

Wird diese Belüftungszeit nicht beachtet bzw. dem Produktionszyklus nicht angepasst oder der Rückstellhub der Saugkonen grenzwertig an das Belüftungszeitende gesetzt, kommt es zu Stapelstörungen und mitunter zu Produktionsausfällen.

Bei den elastischen Halteelementen ist dann die koaxiale Stapelposition der Fertigartikel nicht mehr gegeben, da ein Restvakuum bei der Rückstellbewegung den Artikel teilweise mit zurückzieht. Im Extremfall wird der Artikel wieder mit den Saugkonen zusammen aus dem Stapelkorb herausgezogen. Der Fertigartikel verbleibt auf dem Konus, so dass beim folgenden Zyklus eine Entnahme des neuen Fertigartikels aus dem Werkzeug nicht mehr möglich ist. Gleichwohl werden die Fertigartikel aus dem Werkzeug ausgeworfen, fallen mitunter zwischen die Schneiden des Werkzeugs und werden beim nächsten Zyklus mitgestanzt, wodurch Beschädigungen an den teuren und nur zeitaufwendig zu reparierenden Schneiden auftreten können.

In der Ausführung mit mechanischen Hinterschneidungen im Stapelkanal werden die Fertigartikel beim Rückstellhub zwar abgezogen, jedoch bewirkt der mitunter noch anstehende hohe Haltedruck insbesondere bei dünnwandigen Artikeln eine Verformung am Produkt, was wiederum zu Stapelstörungen beim nachfolgend gestapelten Fertigartikel führt oder qualitative Abstriche nach sich zieht, wie eingeknickte Artikel.

Der Erfindung liegt die Aufgabe zugrunde, ein Verfahren und eine Vorrichtung der eingangs genannten Art ohne die beschriebenen Nachteile zu schaffen, die insbesondere eine Verringerung der Zykluszeiten zur Entnahme der Fertigartikel aus dem Mehrfachwerkzeug und deren Übergabe an eine Stapelstation sowie eine prozesssichere, artikelschonende Handhabung der Fertigartikel ermöglichen.

Diese Aufgabe wird mit einem Verfahren erfindungsgemäß dadurch gelöst, dass der Volumenstrom an jedem Saugkonus in einen über die Versorgungsbohrung auf den Fertigartikel wirkenden Ansaug-Volumenstrom und einen den auf den Fertigartikel ausgeübten Haltedruck begrenzenden Bypass-Volumenstrom aufgeteilt wird, wobei der Ansaug-Volumenstrom größer als der Bypass-Volumenstrom ausgelegt wird. Die Unterdruckversorgung wird bezüglich des Volumenstroms optimiert.

Durch die gezielte Aufteilung des Volumenstroms - deutlich größeres Ansaugvolumen über die Zentralbohrung und geringerer Bypass-Volumenstrom - unmittelbar am Ort des Geschehens lässt sich anders als beispielsweise bei einem am Unterdruckerzeuger selbst verbauten Bypass mit dann entsprechend nicht zu den Saugkonen gelangendem Volumenstrom erreichen, dass gerade ein solcher Ansaug-Volumenstrom wirksam wird, der eine sichere Artikelabnahme bzw. - übernahme gewährleistet, weil der Fertigartikel hinlänglich angesaugt, nicht aber mit unnötig großer Kraft gehalten wird.

Die Fertigartikel können hierdurch schnell sowie sicher aufgenommen und ebenso sehr schnell, zudem in Verbindung mit einem äußerst schonenden Abziehen, in eine Nachfolgestation abgegeben werden. Der Artikelboden wird während des Haltens auf dem Konus nicht verformt und der Fertigartikel beim Abziehen in der Nachfolgestation nicht beschädigt. Der Bypass-Volumenstrom begrenzt den Haltedruck, ohne den Fertigartikel an die Konuswandung anzusaugen. Die schnelle Handhabung bedeutet hierbei ohne zusätzliche Evakuierungszeit bei der Aufnahme der Fertigartikel und ohne zusätzliche Belüftungszeit bei der Abgabe der Fertigartikel. Die Saugkonenplatte fährt die Positionen lediglich an und kehrt unmittelbar nach Erreichen der Position wieder zurück.

Die Saugkonen werden somit vorteilhaft auch schon bei der Annäherung an das Mehrfachwerkzeug mit Unterdruck beaufschlagt.

Der Bypass-Volumenstrom ermöglicht bei entsprechender Auslegung der Unterdruckversorgung, dass selbst im Falle einer nur etwa 60%igen Belegung von auf der Schwenk-Fangeinrichtung vorgesehenen Saugkonen wegen des großen bzw. größeren Ansaug-Volumenstroms dennoch ein sicheres Halten der angesaugten Fertigartikel während des dynamischen Überführens zur Stapelstation gewährleistet ist. Sowohl die Prozesssicherheit als auch die störungsfreie Verfügbarkeit der Thermoformmaschine werden hierdurch deutlich gesteigert.

Nach einer bevorzugten Maßnahme der Erfindung ist vorgesehen, dass die Fertigartikel bei anstehendem Unterdruck auch beim Abziehen über mechanische Hinterschneidungen in die Nachfolgestation übergeleitet werden. Die Nachfolgestation weist beispielsweise Stapelkörbe oder Stapelkanäle auf, die mit in Stapelrichtung wirkenden Hinterschneidungen zum Zurückhalten bzw. Abziehen der Fertigartikel versehen sind.

Durch die Aufteilung des Unterdrucks mit Haltekraft im wesentlichen nur über das ausreichend große Saugvermögen des Ansaug-Volumenstroms der Versorgungsbohrung wird entsprechend die Abziehkraft verringert, so dass die Fertigartikel zwar sicher gehalten, dennoch aber bei einer Rückstellbewegung der Schwenk-Fangvorrichtung mit den Saugkonen trotz des anstehenden Unterdrucks sicher und beschädigungsfrei von den Hinterschneidungen abgezogen werden können. Ein kritisches Abschalten der Unterdruckversorgung ist nicht mehr notwendig und beim Entnahmevorgang aus dem Mehrfachwerkzeug entfällt damit ein wegen des ansonsten doch recht großen, zu evakuierenden Volumens stets eine gewisse Zeit benötigender Druckaufbau. Selbst sehr dünnwandige Fertigartikel werden beim Abziehen bzw. bei der Übergabe nicht verformt.

Die Übergabe der Fertigartikel erfolgt somit exakt reproduzierbar bezüglich der Position und der Koaxialität der Fertigartikel, da deren öffnungsseitige Ränder bei der Rückstellbewegung der Saugkonen aus dem Stapelkorb bzw. dem Stapelkanal an den Hinterschneidungen anliegen. Somit ist jederzeit eine störungsfreie Stapelbildung innerhalb der Stapelkörbe bzw. der Stapelkanäle gewährleistet.

Eine erfindungsgemäße Vorrichtung, insbesondere zur Durchführung des Verfahrens, ist dadurch gekennzeichnet, dass die Saugkonen mit mindestens einem Bypasskanal versehen sind, der einerseits bleibend mit der Atmosphäre in Verbindung steht und andererseits mit der Versorgungsbohrung verbunden ist, wobei die Summe der Querschnitte der Bypasskanäle kleiner als der Querschnitt der Versorgungsbohrung ist. Vorteilhaft weisen die Saugkonen erfindungsgemäß vier Bypasskanäle auf, die sich von der Außenseite der Konuswand ausgehend vorzugsweise orthogonal zur Versorgungsbohrung hin erstrecken.

Jeder Bypasskanal gewährt nur einen gewissen Teilvolumenstrom von der Versorgungsbohrung des Konusbodens zur Konuswandung, und von dort bleibt die Verbindung zur Atmosphäre bestehen, d.h. der Bypass-Volumenstrom saugt den Fertigartikel nicht an die Konuswandung an und ist auch bei mit einem Fertigartikel belegtem, somit abgedichteter Versorgungsbohrung, Saugkonus mit der Atmosphäre verbunden.

Die Bypasskanäle weisen hierbei gegenüber der zentralen Versorgungsbohrung einen wesentlich geringeren Durchmesser auf. Da die Summe der Querschnittsflächen der Bypasskanäle im Vergleich zum Durchmesser der Versorgungsbohrung deutlich geringer ist, ist der Volumenstrom am Saugkonenkopf um ein Vielfaches höher mit einem entsprechend starken Saugvermögen. So ist zum Beispiel bei der Becherproduktion ein Ansaugen bereits dann erfolgreich, wenn der Konusboden noch etwas entfernt, beispielsweise 20 mm, vom Boden des Fertigartikels ist. Der kleinere, erforderliche Zustellweg reduziert ebenfalls die Zykluszeit.

Ein von den Saugkonen aufzunehmender Fertigartikel wird zuerst von der am Saugkonuskopf vorherrschenden, stärkeren Sogwirkung angesaugt. Anschließend wird über die Bypässe ausschließlich Nebenluft gezogen, so dass die Haltekraft nicht zu groß wird.

Eine weitere Ausgestaltung der Erfindung sieht vor, dass die Saugkonen ausgehend vom Konusrand und bis zu dem mindestens einen Bypasskanal sich verjüngend ausgebildet sind. Die Saugkonen sind somit über ihre Länge zweistufig ausgebildet, wobei unter der ersten Stufe ein beispielsweise bei Trinkbechern zylindrischer und bei Margarineschalen oder dergleichen entsprechend an die Kontur angepaßter Abschnitt des Saugkonenkopfes und unter der zweiten Stufe der sich bis zum Saugkonenende erstreckende, konische Abschnitt zu verstehen ist.

Der zylindrische bzw. konturangepaßte erste Abschnitt weist dabei gegenüber dem im Bereich der Austrittsöffnungen der Bypasskanäle beginnenden konischen Abschnitt einen größeren Durchmesser bzw. eine größere Abmessung auf. Das heißt im Übergangsbereich zwischen dem ersten Abschnitt und dem an dieser Stelle die geringste Konizität aufweisenden Konusabschnitt entsteht ein stufenartiger Absatz.

Dadurch liegen die eine der Außenkontur der Saugkonen angepasste Innenkontur aufweisenden Fertigartikel nach der völligen Aufnahme bzw. zur Übergabe ausgehend vom Artikelboden bis zu den Bypasskanälen vollumfänglich dichtend an dem ersten Abschnitt des Saugkonenkopfes an, während zur Wandung der Fertigartikel in dem konischen Abschnitt ein geringer Luftspalt verbleibt.

Damit wird vorteilhaft erreicht, dass auch nach vollständiger Aufnahme der Fertigartikel durch die Saugkonen im Bereich von den Bypasskanälen bis zum abschließenden Konusrand die Verbindung zur Atmosphäre aufrecht erhalten werden kann.

Weitere Einzelheiten und Merkmale der Erfindung ergeben sich aus den Ansprüchen und der nachfolgenden Beschreibung eines in den Figuren dargestellten Ausführungsbeispiels der Erfindung. Es zeigen:
- Fig. 1: als Einzelheit einer Stapelvorrichtung einer Thermoformmaschine eine Schwenk-Fangvorrichtung mit Aufnahmen in Form von Saugkonen nach dem Stand der Technik, schematisch dargestellt;
- Fig. 2: in einem Längsschnitt einen Saugkonus gemäß Fig. 1 mit einer zentralen Versorgungsbohrung während der Artikelaufnahme.
- Fig. 3: in einem Längsschnitt einen erfindungsgemäßen Saugkonus mit zusätzlich zu der zentralen Versorgungsbohrung im Konus vorgesehenen Bypasskanälen, während der Aufnahme eines Fertigartikels dargestellt;
- Fig. 4a: den Saugkonus der Fig. 3 mit vollständig aufgenommenem Fertigartikel, wobei die zentrale Versorgungsbohrung abgedichtet ist und die Bypässe Nebenluft ziehen;
- Fig. 4b: eine Teilansicht des Saugkonus gemäß der Einrahmung von Fig. 4a in vergrößerter, den die Bypassströmung zwischen dem Fertigartikel und dem Saugkonus gewährleistenden Spalt verdeutlichender Darstellung;
- Fig. 5a: den Saugkonus gemäß Fig. 4a bei der Übergabe des Fertigartikels in einen Stapelkanal; und
- Fig. 5b: eine Teilansicht gemäß der Einkreisung von Fig. 5a in vergrößerter Darstellung.

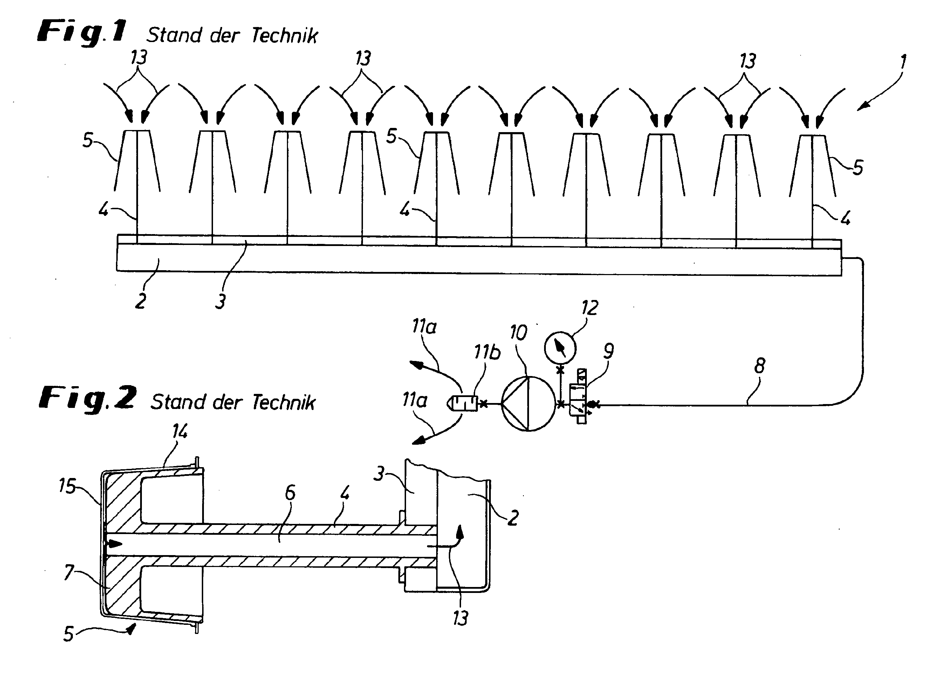

Die zeichnerische Darstellung verzichtet auf die Abbildung einer als solche hinlänglich bekannten Thermoformmaschine und beschränkt sich auf die Vorrichtung zum Stapeln von aus thermoplastischem Kunststoff hergestellten Fertigartikeln, d.h. auf die Vorrichtung, die zwischen einem kombinierten Mehrfachform- und Stanzwerkzeug einerseits und einer Stapelstation zur Aufnahme der Fertigartikel andererseits vorgesehen ist, nämlich insbesondere eine linear verfahrbare Schwenk-Fangvorrichtung 1, wobei die Fig. 1 eine herkömmliche Schwenk-Fangvorrichtung 1 ohne die ansonsten daran angeordnete Drehachse und die Fig. 2 als Einzelheit einen Saugkonus herkömmlicher Bauweise für die Fertigartikel zeigt.

Die nur schematisch dargestellte Schwenk-Fangvorrichtung 1 nach Fig. 1 weist eine Saugkonenplatte auf, die hier aus einem Saugkasten 2 und einer damit verbundenen Formatplatte 3 besteht. Auf der Formatplatte 3 sind eine Vielzahl von Konusstangen 4 mit daran ausgebildeten Saugkonen 5 angeordnet.

Der Saugkasten 2 ist über einen Versorgungsschlauch 8 und ein Mehrwegeventil 9 mit einem Unterdruckerzeuger 10 verbunden. Die von dem Unterdruckerzeuger 10 an- bzw. abgesaugte Luft (Pfeil 11a) wird über einen nachgeschalteten Schalldämpfer 11 b wieder der Atmosphäre zugeführt. Zur Überwachung der Druckverhältnisse ist zwischen dem Mehrwegeventil 9 und dem Unterdruckerzeuger 10 ein Manometer 12 vorgesehen.

Über den Unterdruckerzeuger 10 wird die Umgebungsluft bzw. der Umgebungsdruck aus dem Saugkasten 2 und somit auch aus den zentralen Versorgungsbohrungen 6 der Saugkonen 5 evakuiert. Somit wird an den Saugkonenköpfen 7 ein Unterdruck (Pfeil 13) erzeugt, durch den die aus dem Mehrfachform- und Stanzwerkzeug der Thermoformmaschine ausgeschobenen Fertigartikel 14 angesaugt und vollständig auf die Saugkonen 5 gezogen werden (vgl. hierzu Fig. 2). Es liegt ein nur geringes Saugvermögen vor, was ein dichtes Zustellen erforderlich macht. Bei vollständig aufgenommenen Artikeln gibt es theoretisch keinen Volumenstrom und demzufolge sehr hohe Haltedrücke.

Wie sich aus der Fig. 2 entnehmen lässt, weist die Konusstange 4 und der Saugkonus 5 eine durchgehende, zentrale Versorgungsbohrung 6 auf, die vom Saugkasten 5 bis zum Saugkonuskopf 7 reicht.

Die Fertigartikel 14 werden hierbei mit einem verhältnismäßig hohen Saugdruck, aber kleinem Volumenstrom, angedeutet durch die nur dünn in Fig. 2 gezeichneten Strömungspfeile, und damit wenig Saugvermögen auf den Saugkonen 5 aufgenommen bzw. festgelegt. Die Fertigartikel 14 müssen daher dicht zugestellt werden, wobei dieses System sehr anfällig für Leckagen ist. Nach der Überfahrt der Schwenk-Fangvorrichtung 1 zur Stapelstation, muss zur Abgabe der Fertigartikel 14, in einen beispielsweise Stapelkorb, die Unterdruckversorgung abgeschaltet werden, d.h. der Saugkasten 2 und die zentralen Versorgungsbohrungen 6 werden belüftet und somit dort wieder der Atmosphären- bzw. Umgebungsdruck hergestellt.

Danach wird die Schwenk-Fangvorrichtung 1 mit den freien Saugkonen 5 zur Thermoformmaschine zurückgefahren.

Zur neuerlichen Aufnahme von aus dem Mehrfachform- und Stanzwerkzeug ausgeschobenen Fertigartikeln 14 muss über den Unterdruckerzeuger 10 die in den zentralen Versorgungsbohrungen 6 und dem Saugkasten 2 vorhandene Umgebungsluft wieder evakuiert werden.

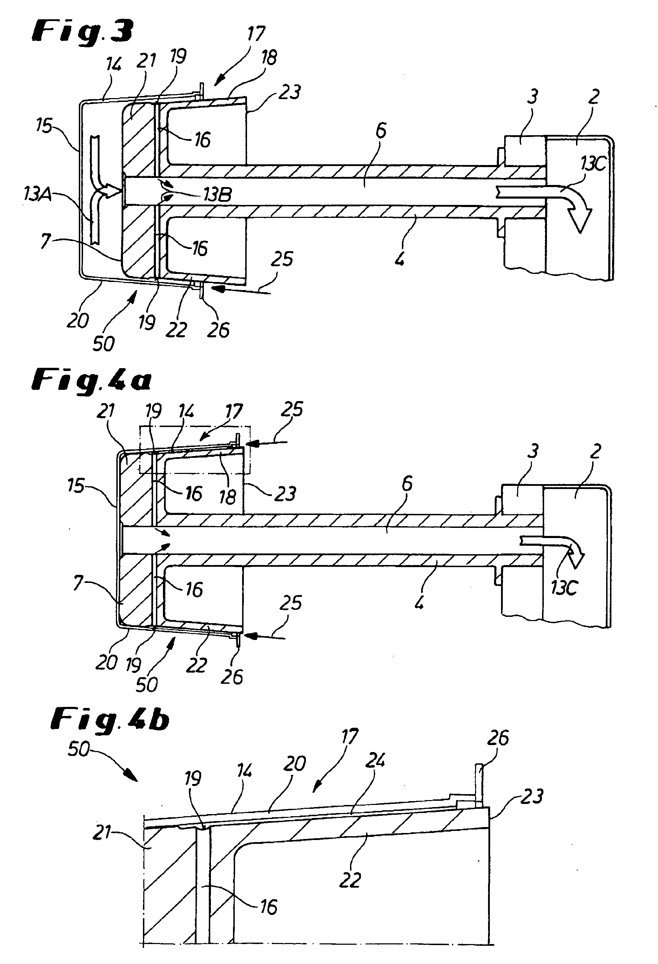

Von diesem zuvor beschriebenen Stand der Technik weicht die in den Fig. 3 bis 5b dargestellte Ausführung, für die - soweit übereinstimmend - dieselben Bezugsziffern wie anhand der Fig. 1 und 2 beschrieben eingetragen sind, entscheidend dadurch ab, dass der als integrierten Bestandteil eine Konusstange 4 aufweisende Saugkonus 50 mit Bypasskanälen 16 versehen ist, die sich von der Außenseite 17 der Konuswand 18 bis in die zentrale Versorgungsbohrung 6 hinein erstrecken.

Zur Aufnahme bzw. zum Ansaugen der Fertigartikel 14 wird mittels des Unterdruckerzeugers 10, vorzugsweise ein Seitenkanalverdichter bzw. ein Gebläse, die Umgebungsluft aus dem Saugkasten 2, aus den zentralen Versorgungsbohrungen 6 und aus den Bypasskanälen 16 evakuiert, wie durch die Pfeile für die Evakuierungsluft 13 C angedeutet.

Die Bypasskanäle 16 weisen einen gegenüber der zentralen Versorgungsbohrung 6 wesentlich geringeren Durchmesser auf, wodurch am Saugkonenkopf 7 ein großer Volumenstrom 13 A zum Ansaugen und Aufnehmen der Fertigartikel 14 anliegt und von der Außenseite 17 der Konuswand 18 her ein demgegenüber kleinerer Bypass-Volumenstrom 13 B wirkt, der die Haltekraft auf den Fertigartikel 14 verringert.

Die Saugkonen 50 sind in einer ersten Stufe 21, von den Bypasskanälen 16 bis zum vorderen Ende des Saugkonenkopfes 7 reichend angepasst an den im Ausführungsbeispiel becherförmigen Fertigartikel 14 ausgebildet und weisen in einer sich daran anschließenden, zweiten Stufe 22 eine sich bis zum abschließenden Konusrand 23 weitende, konische Kontur auf.

Während der Fertigartikel 14 dem Saugkonus 50 in der ersten Stufe 21 zur Zentrierung eng anliegt, ist zwischen der Innenseite der Fertigartikelwandung 20 und der konischen Kontur der zweiten Stufe 22 umlaufend ein Luftspalt 24 gebildet (vgl. hierzu Fig. 4b), über den die Bypasskanäle bleibend mit der Atmosphäre verbunden sind, auch bei einem mit dem Fertigartikel 14 belegten Saugkonus 50, jeweils ausgehend von dem Öffnungsrand 26 des Fertigartikels 14, wie durch den Pfeil 25 angedeutet.

Durch das hohe Saugvermögen ist aufgrund des großen Ansaug-Volumenstroms 13 A eine Aufnahme bzw. ein Ansaugen der Fertigartikel 14 schon dann möglich, wenn der Saugkonenkopf 7 noch vom Fertigartikelboden 15 entfernt ist (vgl. hierzu Fig. 3). Durch den somit erreichten, geringeren Zustellweg reduziert sich nochmals die Zykluszeit für einen Entnahme-/Übergabevorgang mittels der Schwenk-Fangvorrichtung 1.

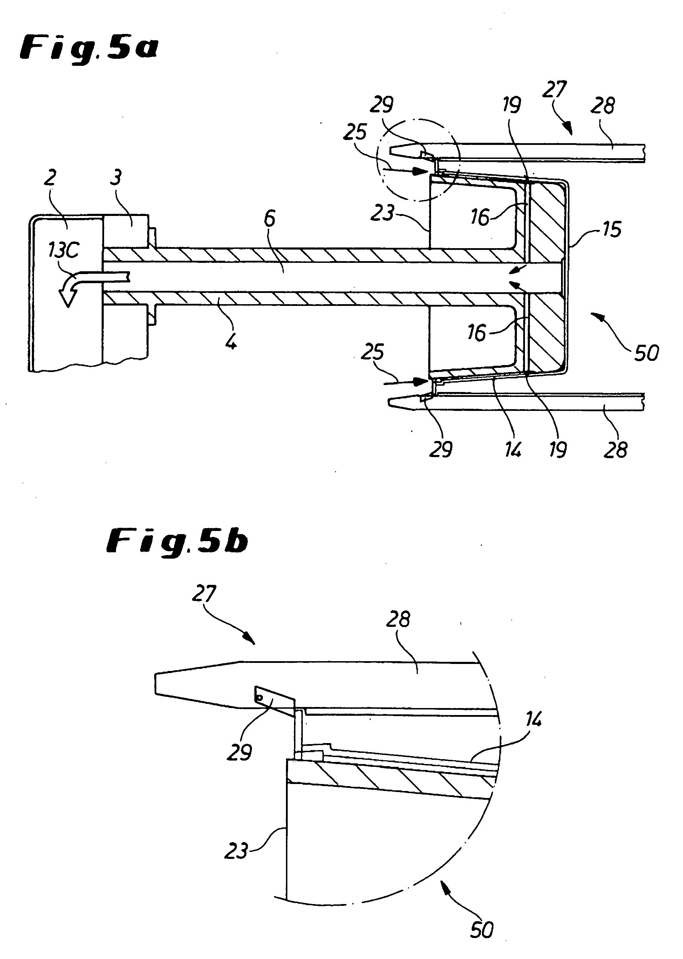

Wie in den Fig. 5a und 5b dargestellt, erfolgt die Abgabe der Fertigartikel 14 in einen Stapelkanal 27, der an den Innenflächen seiner Führungen 28 mit vorzugsweise beweglich ausgebildeten Hinterschneidungen 29 versehen ist.

Die Halte- bzw. Haftkräfte an den Fertigartikeln 14 können durch die Bypasskanäle 16 so gering gehalten werden, dass die Unterdruckversorgung der Saugkonen 50 bei der Abgabe der Fertigartikel 14 nicht unterbrochen werden muss.

Sobald der Fertigartikel 14 mit seinem Öffnungsrand 26 die beweglichen Hinterschneidungen 29 passiert hat, übergreifen diese den Öffnungsrand 26 und halten den Fertigartikel 14 sicher in Stapelposition, während die weiterhin mit Unterdruck versorgten Saugkonen 50 eine Rückstellbewegung vollziehen.

### Bezugszeichenliste

- 1: Schwenk-Fangvorrichtung
- 2: Saugkasten der Saugkonenplatte
- 3: Formatplatte der Saugkonenplatte
- 4: Konusstange
- 5; 50: Saugkonus/Saugkonen
- 6: Versorgungsbohrung
- 7: Saugkonuskopf/Saugkonenkopf
- 8: Versorgungsschlauch
- 9: Mehrwegeventil
- 10: Unterdruckerzeuger
- 11a: Pfeil Abluftvolumenstrom
- 11b: Schalldämpfer
- 12: Manometer
- 13: Pfeile Unterdruck - Volumenstrom
- 13 A: großer Ansaug-Volumenstrom
- 13 B: geringer Bypass-Volumenstrom
- 13 C: Evakuierungs-Luftstrom

- 14: Fertigartikel
- 15: Fertigartikelboden
- 16: Bypasskanal
- 17: Außenseite
- 18: Konuswand
- 19: Öffnung Bypasskanal
- 20: Fertikartikelwandung
- 21: erste Stufe Saugkonus
- 22: zweite Stufe Saugkonus
- 23: Konusrand
- 24: Luftspalt
- 25: Pfeil Atmosphärenverbindung
- 26: Öffnungsrand Fertigartikel
- 27: Stapelkanal
- 28: Führung
- 29: Hinterschneidung

## Patentansprüche

1. Verfahren zur Entnahme von aus einem Mehrfachwerkzeug einer Thermoformmaschine ausgeschobenen Fertigartikeln (14) aus thermoplastischem Kunststoff und Übergabe der Fertigartikel (14) in eine Nachfolgestation (27), wie eine Stapeleinrichtung, umfassend eine Schwenk-Fangvorrichtung (1), die mit einer zur Versorgung mit einem Volumenstrom an einen Unterdruckerzeuger (10) angeschlossenen Saugkonenplatte (2, 3) ausgebildet ist, wobei die zur Aufnahme der Fertigartikel (14) vorgesehenen Saugkonen (5) jeweils mindestens eine sich vom Saugkonenkopf (7) bis in die Saugkonenplatte (2, 3) erstreckende, vorzugsweise koaxial zur Artikelöffnung angeordnete Versorgungsbohrung (6) zum Anlegen eines Unterdrucks aufweisen,
**dadurch gekennzeichnet,**
**dass** der Volumenstrom an jedem Saugkonus (50) in einen über die Versorgungsbohrung (6) auf den Fertigartikel (14) wirkenden Ansaug-Volumenstrom (13A) und einen den auf den Fertigartikel (14) ausgeübten Haltedruck begrenzenden Bypass-Volumenstrom (13B) aufgeteilt wird, wobei der Ansaug-Volumenstrom (13A) größer als der Bypass-Volumenstrom (13B) ausgelegt wird.

2. Verfahren nach Anspruch 1,
**dadurch gekennzeichnet,**
**dass** die Fertigartikel (14) bei anstehendem Unterdruck auch beim Abziehen über mechanische Hinterschneidungen (29) in die Nachfolgestation übergeleitet werden.

3. Vorrichtung zur Entnahme von aus einem Mehrfachwerkzeug einer Thermoformmaschine ausgeschobenen Fertigartikeln (14) aus thermoplastischem Kunststoff und Übergabe der Fertigartikel (14) in eine Nachfolgestation (27), wie eine Stapeleinrichtung, umfassend eine Schwenk-Fangvorrichtung (1), die mit einer zur Versorgung mit einem Volumenstrom an einen Unterdruckerzeuger (10) angeschlossenen Saugkonenplatte (2, 3) ausgebildet ist, wobei die zur Aufnahme der Fertigartikel (14) vorgesehenen Saugkonen (5) jeweils mindestens eine sich vom Saugkonenkopf (7) bis in die Saugkonenplatte (2, 3) erstreckende, vorzugsweise koaxial zur Artikelöffnung angeordnete Versorgungsbohrung (6) zum Anlegen eines Unterdrucks aufweisen, insbesondere zur Durchführung des Verfahrens,
**dadurch gekennzeichnet,**
**dass** die Saugkonen (50) mit mindestens einem Bypasskanal (16) versehen sind, der einerseits bleibend mit der Atmosphäre in Verbindung steht und andererseits mit der Versorgungsbohrung (6) verbunden ist, wobei die Summe der Querschnitte der Bypasskanäle (16) kleiner als der Querschnitt der Versorgungsbohrung (6) ist.

4. Vorrichtung nach Anspruch 3,
**dadurch gekennzeichnet,**
**dass** sich der Bypasskanal (16) oder die Bypasskanäle von der Außenseite (17) der Konuswand (18) bis in die Versorgungsbohrung (6) hinein erstreckt bzw. erstrecken.

5. Vorrichtung nach Anspruch 3 oder 4,
**dadurch gekennzeichnet,**
**dass** die Saugkonen (50) mit vier Bypasskanälen (16) ausgebildet sind.

6. Vorrichtung nach einem der Ansprüche 3 bis 5,
**dadurch gekennzeichnet,**
**dass** die Saugkonen (50) ausgehend vom Konusrand (23) und bis zu dem mindestens einen Bypasskanal (16) sich verjüngend ausgebildet sind.

## Claims

1. A method for removing finished articles (14) consisting of thermoplastic that are ejected from a multiple die of a thermoforming machine and transferring the finished articles (14) to a subsequent station (27), such as a stacking apparatus, comprising a pivoting catching device (1), which is formed with a suction cone plate (2, 3), which is connected to a vacuum generator (10) for supply with a volumetric flow, wherein the suction cones (5) provided to pick up the finished articles (14) each have at least one supply bore (6), which extends from the suction cone head (7) into the suction cone plate (2, 3) and is preferably arranged coaxially to the article opening, for applying a vacuum,
**characterised**
**in that** the volumetric flow at each suction cone (50) is divided into a suction volumetric flow (13A) that acts on the finished article (14) via the supply bore (6) and a bypass volumetric flow (13B) that limits the retaining pressure exerted on the finished articles (14), wherein the suction volumetric flow (13A) is designed to be greater than the bypass volumetric flow (13B).

2. The method according to claim 1,
**characterised**
**in that** when the vacuum is present, the finished articles (14) are also transferred to the subsequent station when pulled off by means of mechanical undercuts (29).

3. A device for removing finished articles (14) consisting of thermoplastic that are ejected from a multiple die of a thermoforming machine and transferring the finished articles (14) to a subsequent station (27), such as a stacking apparatus, comprising a pivoting catching device (1), which is formed with a suction cone plate (2, 3), which is connected to a vacuum generator (10) for supply with a volumetric flow, wherein the suction cones (5) provided to pick up the finished articles (14) each have at least one supply bore (6), which extends from the suction cone head (7) into the suction cone plate (2, 3) and is preferably arranged coaxially to the article opening, for applying a vacuum, in particular for carrying out the method,
**characterised**
**in that** the suction cones (50) are provided with at least one bypass channel (16), which is connected permanently to the atmosphere on one side and is connected to the supply bore (6) on the other side, wherein the sum of the cross sections of the bypass channels (16) is less than the cross section of the supply bore (6).

4. The device according to claim 3,
**characterised**
**in that** the bypass channel (16) or the bypass channels extend (s) from the outside (17) of the cone wall (18) into the supply bore (6).

5. The device according to claim 3 or 4,
**characterised**
**in that** the suction cones (50) are formed with four bypass channels (16).

6. The device according to any one of claims 3 to 5,
**characterised**
**in that** the suction cones (50) are formed such that they taper starting from the cone edge (23) as far as the at least one bypass channel (16).

## Revendications

1. Procédé de prélèvement d'articles finis (14) en matériau thermoplastique extraits d'un outil multiple d'une machine de thermoformage et de transfert des articles finis (14) dans une station suivante (27), comme un dispositif d'empilement, comprenant un dispositif récupérateur pivotant (1) qui est constitué d'un plateau à cône aspirant (2, 3) raccordé à un générateur de dépression (10) pour assurer une alimentation en débit volumique, les cônes aspirants (5) conçus pour recevoir les articles finis (14) présentant respectivement un orifice d'alimentation (6) s'étendant de la tête du cône aspirant (7) jusque dans le plateau à cône aspirant (2, 3) et disposé de préférence coaxialement par rapport à l'orifice de l'article pour appliquer une dépression,
**caractérisé**
**en ce que** le débit volumique est divisé au niveau de chaque cône aspirant (50) en un débit volumique d'aspiration (13A) agissant via l'orifice d'alimentation (6) sur l'article fini (14) et un débit volumique de dérivation (13B) limitant la pression de retenue exercée sur l'article fini (14), le débit volumique d'aspiration (13A) étant conçu supérieur au débit volumique de dérivation (13B).

2. Procédé selon la revendication 1,
**caractérisé**
**en ce que** les articles finis (14) sont transférés dans la station suivante en présence de la dépression même s'ils sont extraits à travers des contre-dépouilles mécaniques (29).

3. Dispositif de prélèvement d'articles finis (14) en matériau thermoplastique extraits d'un outil multiple d'une machine de thermoformage et de transfert des articles finis (14) dans une station suivante (27), comme un dispositif d'empilement, comprenant un dispositif récupérateur pivotant (1) qui est constitué d'un plateau à cône aspirant (2, 3) raccordé à un générateur de dépression (10) pour assurer une alimentation en débit volumique, les cônes aspirants (5) conçus pour recevoir les articles finis (14) présentant respectivement un orifice d'alimentation (6) s'étendant de la tête du cône aspirant (7) jusque dans le plateau à cône aspirant (2, 3) et disposé de préférence coaxialement par rapport à l'orifice de l'article pour appliquer une dépression, en particulier pour réaliser le procédé,
**caractérisé**
**en ce que** les cônes aspirants (50) sont pourvus d'au moins un canal de dérivation (16) qui reste d'une part en liaison avec l'atmosphère et est d'autre part relié à l'orifice d'alimentation (6), la somme des sections transversales des canaux de dérivation (16) étant inférieure à la section transversale de l'orifice d'alimentation (6).

4. Dispositif selon la revendication 3,
**caractérisé**
**en ce que** le canal de dérivation (16) ou les canaux de dérivation s'étend ou s'étendent de la face extérieure (17) de la paroi du cône (18) jusque dans l'orifice d'alimentation (6).

5. Dispositif selon la revendication 3 ou 4,
**caractérisé**
**en ce que** les cônes aspirants (50) sont constitués de quatre canaux de dérivation (16).

6. Dispositif selon une des revendications 3 à 5,
**caractérisé**
**en ce que** les cônes aspirants (50) sont conçus de manière à se rétrécir en partant du bord du cône (23) jusqu'à l'au moins un canal de dérivation (16).
